# EUROPEAN PATENT APPLICATION

(11) **EP 4 654 116 A1**
(43) Date of publication of application: **26.11.2025**
(21) Application number: 23917194.5
(22) Date of filing: 22.11.2023
(51) Int. Cl.: G06Q 50/00, G06F 3/0484

(54) **VIRTUAL AVATAR-BASED SOCIAL METHOD, SYSTEM, STORAGE MEDIUM AND TERMINAL DEVICE**

(30) Priority: 20.01.2023 CN 202310125248
(71) Applicant: Tencent Technology (Shenzhen) Company Limited, Shenzhen, Guangdong 518057 (CN)
(72) Inventor: YUE, Yaohua, Shenzhen, Guangdong 518057 (CN); KANG, Kai, Shenzhen, Guangdong 518057 (CN); XIONG, Wenbo, Shenzhen, Guangdong 518057 (CN); YANG, Chenguang, Shenzhen, Guangdong 518057 (CN); HE, Song, Shenzhen, Guangdong 518057 (CN); ZHU, Qiming, Shenzhen, Guangdong 518057 (CN)
(74) Representative: AWA Sweden AB
(86) International application number: PCT/CN2023/133170
(87) International publication number: WO 2024/152726

(57) **Abstract**

Disclosed in the embodiments of the present invention are a virtual avatar-based social method, a system, a storage medium and a terminal device, which are applied to the technical field of information processing. A social application system will comprise on a displayed social application interface an object screening control and a virtual avatar of each social object; by means of operating the object screening control, determines a first social object related to an online state of a current social user; and closes the object screening control, and displays the virtual avatar of the first social object.

## Description

### RELATED APPLICATION

This application claims priority to Chinese Patent Application No. 202310125248X, entitled "VIRTUAL AVATAR-BASED SOCIAL METHOD, SYSTEM, STORAGE MEDIUM AND TERMINAL DEVICE" and filed with the China National Intellectual Property Administration on January 20, 2023, which is incorporated herein by reference in its entirety.

### FIELD OF THE TECHNOLOGY

The present disclosure relates to the field of information processing technologies, and in particular, to virtual avatar-based data interacting method, system, storage medium and terminal device.

### BACKGROUND OF THE DISCLOSURE

With the development of information processing technologies, currently, functions of social networking software become increasingly diversified. For example, social networking software can simulate a real-world scene (such as a bar or a library) to display a virtual scene, and can also realize real-time voice/video communication between users. In addition, a user can customize an image of his or her own style, participate in interactions on various topics, and so on.

Usually, a social networking software backend actively pushes content such as various topics, various virtual scenes, and various related users to a terminal in which the social networking software is installed, which is convenient for the user to expand his or her social circle by using the terminal. However, the range of content recommended by the social networking software backend in the related art is too large, and the user cannot easily find content that the user is interested in.

### SUMMARY

Embodiments of the present disclosure provide a data interacting method based on a social networking application, including:
displaying an application interface of the social networking application logged in with a current user account, the application interface including a filtering control element and a plurality of second avatars, each of the plurality of second avatars corresponding to one of a plurality of interaction objects, the current user account being associated with a first avatar; and
in response to a triggering operation performed on the filtering control element,
determining at least one first target interaction object, satisfying a preset condition associated with a login state of the current user account, from the plurality of interaction objects, the login state of the current user account indicating a state of the first avatar or a user state of the current user account; and
controlling the application interface to keep displaying the second avatar of the at least one first target interaction object, and hide the second avatars remaining in the plurality of second avatars..

Embodiments of the present disclosure provide a social networking application system, including:
an interface unit, configured to display an application interface of a social networking application logged in with a current user account, the application interface including a filtering control element and a plurality of second avatars, each of the plurality of second avatars corresponding to one of a plurality of interaction objects, the current user account being associated with a first avatar;
an object determining unit, configured to, in response to a triggering operation performed on the filtering control element, determine at least one first target interaction object, satisfying a preset condition associated with a login state of the current user account, from the plurality of interaction objects, the login state of the current user account indicating a state of the first avatar or a user state of the current user account; and
a displaying unit, configured to control the application interface to keep displaying the second avatar of the at least one first target interaction object, and hide the second avatars remaining in the plurality of second avatars.

Embodiments of the present disclosure further provide a computer-readable storage medium, the computer-readable storage medium having a plurality of computer programs stored therein, and the computer programs being configured to be loaded by a processor to perform the data interacting method according to the embodiments of the present disclosure.

Embodiments of the present disclosure further provide a terminal device, including a processor and a memory,
the memory being configured to store a plurality of computer programs, and the computer programs being configured to be loaded by the processor to perform the data interacting method according to the embodiments of the present disclosure; and the processor being configured to implement each of the plurality of computer programs.

### BRIEF DESCRIPTION OF THE DRAWINGS

To describe the technical solutions in embodiments of the present disclosure or in the related art more clearly, the following briefly describes the accompanying drawings required for describing the embodiments or the related art. Apparently, the accompanying drawings in the following descriptions show merely some embodiments of the present disclosure, and a person of ordinary skill in the art may still derive other drawings from these accompanying drawings without creative efforts.
FIG. 1 is a schematic diagram of a data interacting method based on a social networking application according to all embodiments of the present disclosure.
FIG. 2 is a flowchart of the data interacting method based on the social networking application according to all embodiments of the present disclosure.
FIG. 3 is another flowchart of the data interacting method based on the social networking application according to all embodiments of the present disclosure.
FIG. 4 is still another flowchart of the data interacting method based on the social networking application according to specific application embodiments of the present disclosure.
FIG. 5a is a schematic diagram of an application interface of the social networking application according to the specific application embodiments of the present disclosure.
FIG. 5b is another schematic diagram of an application interface of the social networking application according to the specific application embodiments of the present disclosure.
FIG. 5c is another schematic diagram of an application interface of the social networking application according to the specific application embodiments of the present disclosure.
FIG. 5d is a schematic diagram of a sub-control element for object filtering according to the specific application embodiments of the present disclosure.
FIG. 5e is a schematic diagram of an application interface of the social networking application when a user performs an enlarging pinch operation according to the specific application embodiments of the present disclosure.
FIG. 6 is a flowchart of another data interacting method based on the social networking application according to the specific application embodiments of the present disclosure.
FIG. 7 is a schematic structural diagram of the social networking application system according to the specific application embodiments of the present disclosure.
FIG. 8a is another flowchart of a method for interaction between users according to the specific application embodiment of the present disclosure.
FIG. 8b is another schematic diagram of an application interface of the social networking application after an operation is performed on a matching control element according to the specific application embodiments of the present disclosure.
FIG. 9 is another flowchart of another method for interaction between users according to the specific application embodiments of the present disclosure.
FIG. 10 is another flowchart of another method for interaction between users according to the specific application embodiments of the present disclosure.
FIG. 11 is another schematic diagram of a distributed system to which the data interacting methods based on the social networking application is applied according to the application embodiments of the present disclosure.
FIG. 12 is another schematic diagram of a block structure according to the application embodiments of the present disclosure.
FIG. 13 is a schematic diagram of a logic structure of the social networking application system according to all embodiments of the present disclosure.
FIG. 14 is a schematic diagram of a logic structure of a terminal device according to all embodiments of the present disclosure.

### DESCRIPTION OF EMBODIMENTS

The following clearly and completely describes the technical solutions in embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

Terms such as "first", "second", "third", and "fourth" (if exist) in the specification, claims, and accompanying drawings of the present disclosure are used for distinguishing between similar objects, and is not intended to describe a particular order or sequence. Data used in such a way are interchangeable in proper circumstances, so that the embodiments of the present disclosure described herein can be implemented in orders other than the order illustrated or described herein. In addition, terms "include", "have", and any other variants mean to cover the non-exclusive inclusion. For example, a process, method, system, product, or device that includes a series of steps or units is not necessarily limited to the listed steps or units, but may include other steps or units not expressly listed or inherent to the process, method, product, or device.

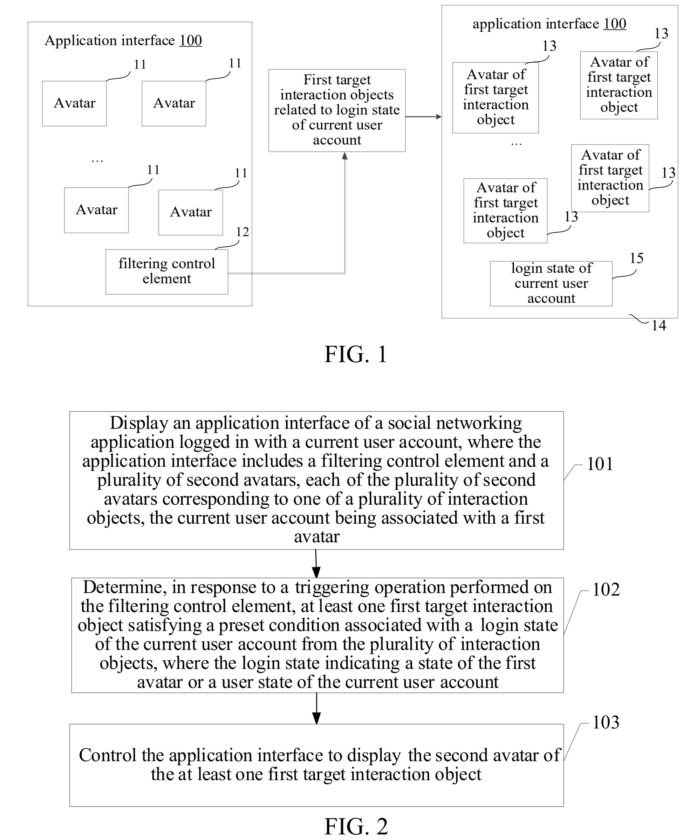

The embodiments of the present disclosure provide an avatar-based data interacting method, applicable to a social networking application system. As shown in FIG. 1, the social networking application system may implement an interaction process between users by using the following method:
displaying an application interface 100 of the social networking application logged in with a current user account, the application interface 100 including a filtering control element and a plurality of avatars 11, each of the plurality of avatars 11 corresponding to one of a plurality of interaction objects, and each of the plurality of avatars 11 being associated with at least one interaction control element; in response to a triggering operation performed on the filtering control element 12, determining at least one first interaction object (or first target interaction object) 13, satisfying a preset condition associated with a login state of the current user account, from the plurality of interaction objects, the login state of the current user account indicating a state of an avatar of the current user account or a user state of the current user account; and controlling the application interface to keep displaying the avatar of the at least one first interaction object, and hide the remaining avatars in the plurality of avatars 11.

FIG. 1 does not show the interaction control elements bound to or associated with the respective avatars 11. The interaction control elements may be displayed in the application interface in a plurality of manners. For example, in the respective avatars 11, an entire avatar may be an interaction control element, a part of an avatar may be an interaction control element, or an interaction control element may be displayed around an avatar. A specific form of the interaction control elements is not limited herein.

Further, a first area of the application interface further displays the login state of the current user account. The first area may be an area such as a bottom, a top, or a side of the application interface. The first area 14 shown in FIG. 1 is at the bottom of the application interface, and displays the login state 15 of the current user account.

During specific implementation, the social networking application system may be applicable to a terminal device of the social networking application, and the terminal device of the social networking application implements the avatar-based data interacting method.

Alternatively, the social networking application system may be applied to a social networking application client and a social networking application server. The social networking application client provides an interface for interacting with a user. When the current user of the current user account performs an operation on the application interface of the social networking application displayed by the social networking application client, the social networking application client initiates a corresponding request to the social networking application server. After executing each request, the social networking application server returns an execution result of the request to the social networking application client. The social networking application client may be a social networking application program installed in any terminal device, or may be a browser of a terminal device. The terminal device may include any of the following electronic devices: a smartphone, a portable computer such as a tablet computer, a desktop computer, an in-vehicle device, a wearable device, and the like.

In some embodiments of the present disclosure, the social networking application system may determine a target interaction object for the current user account to interact with based on the login state of the current user account. In this way, the current user may dynamically set the login state of the current user account, to define the determined target interaction object. This is convenient for the user to find the corresponding interaction object based on a requirement of the user, avoids a plurality of repeated matching operations required for matching an interaction object meeting the requirement of the user, and improves accuracy in a process of determining the target interaction object. In addition, each of the avatars displayed in the application interface is associated with an interaction control element, so that it is convenient for the user to initiate an interaction operation with a specific interaction object, improving human-computer interaction efficiency in an interaction operation process of the user.

The embodiments of the present disclosure provide an avatar-based data interacting method based on a social networking application, executable by a terminal device, and specifically executable by the social networking application system installed in the terminal device. A flowchart is shown in FIG. 2, and the method includes the following operations.

Operation 101: Display an application interface of the social networking application logged in with a current user account, where the application interface includes a filtering control element and a plurality of second avatars, each of the plurality of second avatars corresponding to one of a plurality of interaction objects, the current user account being associated with a first avatar. Each second avatar may be associated with at least one interaction control element.

The social networking application system provides various interfaces for interacting with a user. In this way, the user can implement the following functions by operating these interfaces: setting a personal avatar of the user, performing real-time interaction (for example, real-time voice/video interaction) with another user (e.g., an avatar of another user account) by using the personal avatar, and participating in discussion on any topic, and the like. Specifically, the social networking application system displays the application interface. The application interface may generally include any combination of the following: a personal avatar (the first avatar) of the current user account, the quantity of users that have registered in the social networking application, avatars of friend user accounts that the current user account has followed and avatars of user accounts that follow the current user account, a plurality of functional operation control elements, and the like. Each functional operation control element is configured to implement a specific function, for example, a function such as user setting or adding another friend user account.

In the embodiments of the present disclosure, the plurality of functional operation control elements displayed in the application interface include the filtering control element, and may further include a state setting control element, a matching control element, and the like. When the user performs a triggering operation on the filtering control element, the social networking application system proceeds to perform the following operation 102. The state setting control element is configured to set the login state of the current user account, and the matching control element is configured to find, based on a preset matching condition, one or more interaction objects to interact with the current user account from the social networking application.

Further, the application interface further includes avatars of interaction objects in the social networking application, the interaction objects being objects configured to be controlled in an interaction with the current user account based on user input(s). The interaction objects are objects that can satisfy a social requirement of the current user account, and may specifically include a user account that satisfies the social requirement of the current user account, a chat scene that satisfies the social requirement of the current user account, and/or a topic that satisfies the social requirement of the current user account, and the like. Through the user account as an interaction object, allows the current user account to interact with the interaction object. Through the chat scene as an interaction object, allows the current user account to join a created chat scene. Through the topic as an interaction object, allows the current user account to participate in discussion on a specific topic.

In addition to the three types of objects, namely, the user account (or user), the chat scene, and the topic, the interaction objects may further include other types of objects, provided that the social requirements of the current user account can be satisfied. A specific form of the interaction objects is not limited herein.

Further, any avatar displayed in the application interface is associated with an interaction control element corresponding to an interaction object, and may be associated with one or more interaction control elements. In this way, when the current user performs an operation on an interaction control element of any avatar, in response to the operation performed on the interaction control element, the social networking application system performs a social interaction operation (or referred to as an interaction operation) on the interaction object corresponding to the avatar.

When an avatar is displayed in the application interface, it may be displayed in any rendering form, such as a two-dimensional rendering form or a three-dimensional rendering form. In addition, because the avatar is associated with the interaction control element, when the avatar is displayed in the application interface, the corresponding interaction control element may be displayed in a plurality of manners, which may specifically include, but is not limited to, the following several manners: using the entire avatar as the interaction control element; using a part of the avatar as the interaction control element; displaying the interaction control element around the avatar; displaying a part of information (a picture of a chat scene and the like) of an interaction object around the avatar, and using the part of information of the interaction object as the interaction control element, and the like.

In addition, the interaction operation performed on the interaction object may be an operation of performing various social interaction activities with the interaction object. Specifically, based on different types of interaction objects, interaction operations for the interaction objects are also different. The interaction operation may include one or more. For example, an interaction object is a user account, an avatar of thereof is a character avatar of the user account, and a corresponding interaction operation with the avatar/the user account may include initiating an interaction with the user account, following the user account, and the like. An interaction object is a chat scene established on the social networking application, an avatar thereof may be a three-dimensional planet model, and a corresponding interaction operation with the avatar/the chat scene may include joining the chat scene and viewing details of the chat scene. An interaction object is a topic created or generated on the social networking application, an avatar thereof may be another three-dimensional planet model, and a corresponding interaction operation with the avatar/the topic may include: viewing details of the topic, and the like.

Operation 102: In response to a triggering operation performed on the filtering control element, determine at least one first target interaction object (or first interaction object) satisfying a preset condition associated with a login state of the current user account, from the social networking application (including from the plurality of interaction objects), where the login state of the current user account indicating a state of the first avatar of the current user account or a state of the current user. For example, the state of the current user may be a text and/or image edited by the current user indicating their state in real life or their current thoughts, etc.

Specifically, the login state of the current user account may be preset by the current user in the social networking application system. When the interacting process according to the embodiments is initiated, the login state preset by the current user may be determined as the login state of the current user account. Further, if the current user has not preset the login state, when the interacting process according to the embodiments is initiated, a default login state may be determined as the login state of the current user account.

The login state of the current user account may be configured for describing/ indicating the state of the first avatar of the current user account, including a posture of the first avatar, for example, a posture such as reading comics, drinking tea, or chatting. The login state of the current user account may also be configured for describing a state of an apparatus for setting the first avatar, for example, a battery level of the apparatus for setting the first avatar. The login state of the current user account may alternatively describe a state of the current user, such as a geographical area or weather of the current user.

When the current user performs the triggering operation on the filtering control element, the social networking application system may first determine the corresponding first target interaction objects based on the login state of the current user account. In some embodiments, the first target interaction objects may be determined based on the login state of the current user account and other information (for example, actual operation information of the current user in the social networking application system).

Specifically, the social networking application system may determine different types of first target interaction objects based on different types of login states of current user account. The login states of the current user accounts may include, but are not limited to, the following several types of login states: an interaction-type login state, a content-type login state, and the like.

The interaction-type login state is a login state in which a plurality of users (user accounts) simultaneously participate, for example, a login state of "go dancing", "want to chat", or "want to go singing". Such a type of login states allows simultaneous participation of a plurality of users and interaction between the users. In this case, the at least one first target interaction object determined by the social networking application system may include, but is not limited to, at least one of the following interaction objects: an interaction object (e.g., a user account) having the same login state as the current user account, or a chat scene associated with the login state of the current user account. The chat scene is a scene in which a channel of a real-time session (such as a voice/video call) has been created, and the chat scene may be a chat scene of two or more users.

The content-type login state is a login state without simultaneous participation of a plurality of users, for example, "reading comics". In this case, the at least one first target interaction object determined by the social networking application system may include, but is not limited to, at least one of the following interaction objects: an interaction object (e.g., a user account) having the same login state as the current user account, or a topic associated with the login state of the current user account. The topic is a topic of content included in the login state of the current user account, and includes comment information, like information, and the like published by users on the topic.

Operation 103: Control the application interface to keep displaying the second avatar of the at least one first target interaction object, and hide the second avatars remaining in the plurality of second avatars.

Specifically, when the social networking application system performs the operation 103, at least one of the following may be included: hiding the first avatar of the current user account and the filtering control element displayed in the application interface and displaying the second avatar of the at least one first target interaction object; hiding the filtering control element displayed in the application interface and displaying the first avatar of the current user account and the second avatar of the at least one first target interaction object; or hiding the filtering control element displayed in the application interface and displaying the second avatar of the at least one first target interaction object. The "hiding" operation herein may include: canceling displaying, collapsing, or the like.

When hiding the filtering control element displayed in the application interface, the social networking application system may further hide other functional operation control elements, such as the state setting control element and the matching control element. In addition, to display the second avatar of the first target interaction object more abundantly, a two-dimensional image of the first target interaction object may be displayed first, the three-dimensional model of the first target interaction object is then loaded based on the two-dimensional image of the first target interaction object, and the three-dimensional model is bound with the interaction control element of the first target interaction object. When the interaction control element receives a triggering operation, it controls the current user account (e.g., via the first avatar) to perform an interaction operation based on the first target interaction object corresponding to the interaction control element. In this way, a speed of displaying the second avatar representing the first target interaction object can be improved by first displaying the two-dimensional image and then loading the three-dimensional model.

Specifically, the second avatar of the first target interaction object may be an avatar in any form. For example, if the first target interaction object is a chat scene or a topic, the corresponding avatar may be a planet model; and if the first target interaction object is a user account/a user, the corresponding avatar may be a person model, an animal model, or the like. In addition, the social networking application system further binds each second avatar with an interaction control element of the first target interaction object, so that when a current user performs an operation on the interaction control element, the interaction control element receives a triggering operation, and the social networking application system performs an interaction operation on the first target interaction object.

Further, the social networking application interface further includes a background space, used as a background of various functional operation control elements and avatars of interaction objects. Therefore, when performing operation 103, the social networking application system may further hide a current background space, and load a background space associated with the login state of the current user account. The background space may include at least one of the following backgrounds: a background picture, background audio, a background animation, or the like.

In some embodiments of the present disclosure, after the social networking application system performs operation 101, namely, displaying the application interface, the current user account may perform an operation in the background space, for example, performing a gesture operation in the background space. In this case, when user operation information is received in the background space of the application interface, and the user operation information is a preset refresh operation gesture, for example, an enlarging pinch operation, the social networking application system obtains one or more fourth target interaction objects in response to the user operation information, and displays one or more avatars of the one or more fourth target interaction objects in the application interface.

Specifically, if the background space is a cosmic space model, and the current user performs the enlarging pinch operation in the background space, the social networking application system may include the avatars of the target interaction objects that are being displayed currently into a star system object of the cosmic space model, displays the avatars of the target interaction objects by using a star system model, explore in the cosmic space model and find a new star system object (including one or more new target interaction objects), and display the avatars of the new target interaction objects by using another star system model. When exploring to find the new target interaction objects included in the new star system object, the social networking application system may explore based on the login state of the current user account, or may explore based on other information.

When obtaining the fourth target interaction object, the social networking application system may search the entire social networking application based on specific information, for example, based on the login state of the current user account, or based on operation information of the user in the application interface.

Further, the social networking application system may display the avatars of the first target interaction objects in a split-screen lazy loading manner. Specifically, the social networking application system may first determine, based on a size of a displaying screen for displaying the application interface, avatars of a plurality of first target interaction objects that can be accommodated by the displaying screen at a time, and display the determined avatars of the plurality of first target interaction objects. When a screen sliding operation is received in the application interface, the social networking application system may determine and display avatars of a plurality of another first target interaction objects that can be accommodated in the displaying screen at a next time. In this way, the operations of determining and displaying avatars of a plurality of first target interaction objects are cyclically performed, until avatars of all the first target interaction objects associated with the login state of the current user account have been displayed. Alternatively, when the number of sliding operations performed on the displaying screen reaches a preset quantity, the social networking application system may return to display the avatars of the plurality of first target interaction objects that were displayed just before the screen sliding operation was received for the first time.

Because the split-screen lazy loading manner is to first determine first target interaction objects to be displayed of one screen, and then display the determined first target interaction object to be displayed, instead of determining all the first target interaction objects associated with the login state of the current user account and then displaying the avatars of all the first target interaction objects. In this way, frame freezing that may occur in a sliding process of the screen can be greatly reduced, and memory usage can be reduced.

In addition, operations 101 to 103 are a process in which the social networking application system actively initiates interaction object filtering, and may determine the interaction objects based on the login state of the current user account. In all embodiments of the present disclosure, the current user may set the login state of the current user account by using the social networking application system. Specifically,

The social networking application interface displayed in operation 101 further includes a state setting control element. When the current user performs an operation on the state setting control element, the social networking application system switches from displaying the application interface to displaying a state setting interface in response to the operation on the state setting control element, and the state setting interface includes a state control element. When the current user performs an operation on the state control element, a login state selecting interface is displayed in response to the operation on the state control element. The login state selecting interface includes at least one of the following: a plurality of candidate login states, a customization control element for customizing a login state, or an intelligently matched login state. The current user may randomly select any candidate login state; or the current user may operate the customization control element to input a login state defined by the current user; or the social networking application system intelligently matches a corresponding login state based on specific information (such as a location or a climate of a state of the current user account) through the intelligently matched login state. Finally, the login state determined in the login state selecting interface is determined as the login state of the current user account.

In the method according to the embodiments, the application interface displayed by the social networking application system includes the filtering control element and a plurality of avatars each corresponding one of a plurality of interaction objects. In this way, the first target interaction objects associated with the login state of the current user account can be determined through the triggering operation performed on the filtering control element, the filtering control element may be hidden, and the avatars of the first target interaction objects are displayed. The social networking application system determines the target interaction object based on the login state of the current user account. In this way, the current user may dynamically set the login state of the current user account, to define the determined target interaction object. This is convenient for the user to find a corresponding interaction object based on a requirement of the user, avoids a plurality of repeated matching operations required for matching an interaction object meeting the requirement of the user, and improves accuracy in a process of determining the target interaction object. In addition, the avatar of each interaction object displayed in the application interface is associated with an interaction control element, so that it is convenient for the user to initiate an interaction operation with a specific interaction object, improving human-computer interaction efficiency in a data interacting process.

In some specific application embodiments, while performing operation 103, the social networking application system further displays the login state of the current user account in a first area of the application interface, and after the displaying of the login state of the current user account in the first area has reached a preset time (for example, one second), replaces the login state of the current user account in the first area with the matching control element. The matching control element is configured to find, through matching based on a preset matching condition, one or more interaction objects from the social networking application to interact with the current user account. When the user performs an operation on the matching control element, in response to the operation performed on the matching control element, the social networking application system determines one or more user accounts which match the login state of the current user account, to enable interaction, such as playing a game or performing real-time audio and/or video interaction, to be carried out between the current user account and the matched one or more user accounts.

Further, at least one candidate login state is displayed in a second area of the application interface, and the first area and the second area are neighboring areas. When detecting a triggering operation of the current user performed on the second area, or detecting a user operation of moving from the first area to the second area of the application interface, the social networking application system displays one of the at least one candidate login state in the first area, e.g., determined through the triggering operation or the user operation, determines a related second target interaction object based on the candidate login state displayed in the first area, hides avatars currently being displayed in the application interface, and displays an avatar of the second target interaction object in the application interface.

In this case, if the one candidate login state currently displayed in the first area is inconsistent with the login state of the current user account, the social networking application system may replace the login state of the current user account with the one candidate login state displayed in the first area, and the current user does not need to set the login state of the current user account through an operation performed on the state setting control element, which is convenient for setting the login state of the current user account.

In some specific application embodiments, after performing operation 101, when the current user performs an operation on the filtering control element, while performing operation 102, the social networking application system may perform the following operations:
in response to the triggering operation performed on the filtering control element, switching from displaying the application interface to displaying a sub-control element panel for interaction object filtering, where the sub-control element panel displays a plurality of sub-control elements for interaction object filtering each corresponding to one of a plurality of preset login states; when the current user performs an operation on any one of the sub-control elements, hiding the sub-control element panel in response to the operation performed on the sub-control element; and if a login state corresponding to the operated sub-control element is consistent with the login state of the current user account, performing the operation of determining, namely, operation 102; or if the login state corresponding to the operated sub-control element is inconsistent with the login state of the current user account, determining one or more third interaction objects (or third target interaction objects) associated with the login state corresponding to the operated sub-control element, and displaying one or more avatars of the one or more third target interaction objects in the social networking application interface, e.g., to replace the plurality of second avatars.

In this case, the login state corresponding to the sub-control element operated by the current user account is not necessarily the login state of the current user account. In this way, if the login state corresponding to the sub-control element operated by the current user is inconsistent with the login state of the current user account, the social networking application system may further directly replace the login state of the current user account with the login state corresponding to the sub-control element operated, which is efficient for setting the login state of the current user account.

Further, in some specific application embodiments, after the application interface is displayed, the current user may initiate interaction with another user through the social networking application system. Specifically, the following several cases may be included, but are not limited thereto.
(1) When the current user account is currently not in any chat scene, or in other words, the current user account has not established a chat session with any other interaction object, the following may be performed.

In one example, an avatar of an interaction object displayed in the social networking application interface includes/is an avatar of a user account, and an interaction control element of the avatar of the user account may be the avatar of the user account. In this way, the current user account may perform an operation on the avatar of the user account. In response to the operation performed on the avatar of the user account, a chat establishing control element that is configured for the current user account to interact with the user account in real time is displayed. The current user performs an operation on the chat establishing control element, to create and display a chat scene and an inviting control element. Avatars respectively corresponding to the current user account and the interaction object for interacting with the current user account are displayed in the chat scene. The inviting control element is configured to invite at least one interaction object to join the chat scene. The at least one interaction object may be currently in another chat scene or not in any chat scene.

In another example, the application interface displayed by the social networking application system further includes the matching control element. The current user may perform an operation on the matching control element. In response to the operation performed on the matching control element, the social networking application system determines the login state of the current user account, determines an interaction object having the same login state as the current user account, displays a chat scene and the inviting control element, and displays the avatars respectively corresponding to the current user account and the interaction object in the chat scene.

When the current user account is currently not in any chat scene, to initiate interaction with an interaction object, the current user may perform an operation on the chat establishing control element through the application interface. The social networking application system first determines chat scene states of the current user account and the interaction object, and then initiates a session of the current user account with the interaction object based on the chat scene states. A chat scene state is configured for describing whether a user account is currently in a chat scene.

Specifically, if the chat scene state of the current user account indicates that the current user account is currently not in a chat scene, and the chat scene state of the interaction object indicates that the interaction object is currently not in the chat scene, the social networking application system first creates a chat scene, adds the current user account and the interaction object to the created chat scene, and establishes a chat session of the current user account with the interaction object.

If the chat scene state of the interaction object indicates that the interaction object is currently in a chat scene and the chat scene state of the current user account indicates that the current user account is currently not in the chat scene, the interaction object is instructed to first exit the current chat scene which the interaction object is currently in; and if the interaction object agrees to exit the current chat scene, the social networking application system first creates a chat scene, adds the interaction object to the created chat scene, and establishes a chat session between the current user account and the interaction object.

(2) When the current user account is currently in a chat scene, or in other words, the current user account has established a chat session with another user account, the following may be performed.

In one example, the current user account is currently in the chat scene, and the social networking application system displays the chat scene and the inviting control element. The current user performs an operation on the inviting control element, and a list of user accounts to be invited is displayed in response to the operation performed on the inviting control element. When an invitation to at least one user account in the list of user accounts to be invited is received (e.g., the at least one user account is selected), if any of the at least one user account agrees to join the chat scene, the social networking application system displays an avatar of the any user account (being an interaction object) in the chat scene.

Further, if the current user account and an interaction object/user account of the at least one user account are in the same chat scene, the social networking application system may further perform a user prompt. The user prompt is configured to prompt that the interaction object invited by the current user account is in the chat scene of the current user account. The social networking application system may further switch to displaying at least one interaction control element (such as a voice or video call control element, a game playing control element, and a friend-adding control element) for interacting with the interaction object. By using these interaction control elements, the social networking application system may directly interact with the interaction object.

To enable the current user account which is currently in a chat scene to initiate interaction with an interaction object, the current user account may initiate invitation to at least one user account by using the inviting control element. When any of the at least one user account, as an interaction object accepts the invitation, the social networking application system first determines chat scene states of the current user account and the interaction object, and initiates a session with the interaction object based on the chat scene states.

If the chat scene state of the current user account indicates that the current user account is currently in a chat scene, and the chat scene state of the any interaction object indicates that the any interaction object is not in the chat scene, the social networking application system directly adds the any interaction object to the chat scene that the current user account is in, and establishes a chat sub-session to the any interaction object.

If the chat scene states of the any interaction object and the current user account indicate that the any interaction object and the current user account are in different chat scenes, the any interaction object is instructed to exit its current chat scene; and if the any interaction object agrees to exit the current chat scene, the any interaction object is added to a chat scene that the user account is currently in, and a chat sub-session with the any interaction object is established.

In another example, the current user account is currently in a chat scene, and the social networking application system displays the chat scene. The chat scene includes an avatar of a user account as an interaction object. When the current user performs an operation on the avatar of the interaction object in the chat scene, at least one interaction control element (such as a voice or video call control element, a game playing control element, and a friend-adding control element) for interacting with the interaction object may be displayed in response to the operation performed on the avatar interaction object. In response to an operation performed on any of the at least one interaction control element, the social networking application system directly interacts with the interaction object.

To enable interaction between the current user account and an interaction object in the same chat scene, when the current user performs an operation on an interaction control element of an interaction object, the social networking application system determines that chat scene states of the current user account and the interaction object indicate that the current user account and the interaction object are currently in the same chat scene. In other words, a chat session has already been established between the current user account and the interaction object. The social networking application system may first set a chat sub-session between the current user account and the interaction object. A mode of the chat sub-session is a private chat mode. In other words, a third user in the current chat scene is blocked from the chat sub-session. Moreover, interaction, such as a voice/video call, and other forms of interaction, with the interaction object is implemented through the chat sub-session.

In this way, a voice/video session between users/user accounts may be established in various chat scene login states of the users, to implement interaction between the users and expand a range of interaction between the users.

Further, in some specific application embodiments, after displaying the application interface, the social networking application system may further receive an invitation from an interaction object for interaction with the current user account. Specifically, the following several cases may be included, but are not limited thereto.

### (1) The current user account is currently not in any chat scene

In one example, when the social networking application system pops up an invitation selecting control element in the application interface, where the invitation selecting control element is configured for the current user to select agreeing or refusing to join a chat scene of an inviting user account who is currently inviting the current user account, and the current user selects agreeing to join, the social networking application system receives information about agreeing to join the chat scene of the inviting user account, displays the chat scene of the inviting user account, and displays avatars of the current user account and the inviting user account in the chat scene of the inviting user account.

To enable the current user account currently not in any chat scene to join the chat scene of the inviting user account, the social networking application system determines the chat scene state of the current user account. If the chat scene state of the current user account indicates that the current user account is currently not in a chat scene, the social networking application system directly adds the current user account to the chat scene of the inviting user account. Through a chat session or a chat sub-session between the current user account and the inviting user account, voice/video interaction, and the like, between the current user account and the inviting user account may be implemented.

### (2) The current user account is currently in a chat scene

In one example, when the social networking application system pops up the invitation selecting control element in a displayed chat scene, where the invitation selecting control element is configured for the current user to select agreeing or refusing to join a chat scene of an inviting user account, and the current user agrees to join, the social networking application system receives information about agreeing to join the chat scene of the inviting user account when it is currently displaying a chat scene that the current user account is currently in, and switches from displaying the chat scene of the current user account to displaying the chat scene of the inviting user account. This case is applicable to a scenario where the current user account and the inviting user account are currently in different chat scenes, or where the current user account is currently in a chat scene, and the inviting user account is currently not in any chat scene.

In another example, when the social networking application system pops up the invitation selecting control element in a displayed chat scene, where the invitation selecting control element is configured for the current user to select agreeing or refusing to join a chat scene of an inviting user account, and the current user account agrees to join, the social networking application system receives information about agreeing to join the chat scene of the inviting user account performing invitation, and directly displays at least one interaction control element (such as a voice/video call control element, a game playing control element, and a friend-adding control element) for the current user account to interact with the inviting user account. In response to an operation performed on any of the at least one interaction control element, the social networking application system directly interacts with the inviting user account in real time. In this case, the current user account and the inviting user account are in the same chat scene.

To enable the current user account which is currently in a chat scene to join another chat scene of another user account which is the inviting user account, the social networking application system determines chat scene states of the current user account and the inviting user account. If the chat scene states of the current user account and the inviting user account indicate that the current user account and the inviting user account are currently in different chat scenes, the current user account exits its current chat scene, and joins the chat scene of the inviting user account. Through a chat sub-session between the current user account and the inviting user account, voice/video interaction, and the like, between the current user account and the inviting user account are implemented.

If the chat scene states of the current user account and the inviting user account indicate that the current user account and the inviting user account are in the same chat scene, the current user account directly joins the chat scene of the inviting user account. Through a chat sub-session between the current user account and the inviting user account, voice/video interaction, and the like, between the current user account and the inviting user account are implemented.

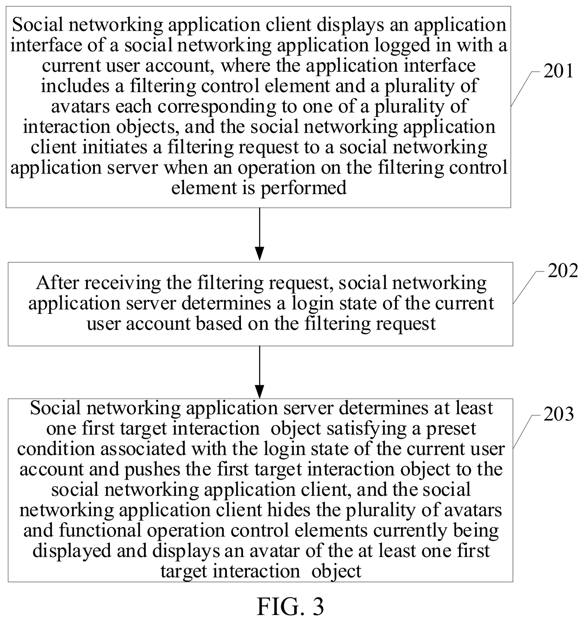

Some specific application embodiments of the present disclosure further provide an avatar-based data interacting method, in which the foregoing social networking application system may be used in a social networking application client of a terminal device and a social networking application server, and the avatar-based data interacting method is implemented through interaction between the social networking application client and the social networking application server. A flowchart is shown in FIG. 3, and the method includes the following operations.

Operation 201: The social networking application client displays an application interface of a social networking application logged in with a current user account, where the application interface includes a filtering control element and a plurality of avatars each corresponding to one of a plurality of interaction objects in the social networking application, and the social networking application client initiates a filtering request to the social networking application server when a current user of the current user account performs an operation on the filtering control element. The current user account may be associated with a first avatar, and the plurality of avatars may be second avatars.

The current user may actively initiate the filtering request to the social networking application server through the social networking application client, to request the social networking application server to determine at least one first target interaction object associated with a login state of the current user account for the social networking application client.

The filtering request may include the login state of the current user account. In this way, when the current user account performs the operation on the filtering control element, the social networking application client first obtains the login state of the current user account, adds the login state of the current user account to the filtering request, and sends the filtering request to the server.

Operation 202: After receiving the filtering request, the social networking application server determines a login state of the current user account based on the filtering request.

Specifically, if the filtering request initiated by the social networking application client includes a login state of the current user account, the social networking application server may directly determine the login state included in the filtering request as the login state of the current user account. In this case, if the login state included in the filtering request is inconsistent with a login state of the current user account stored in the social networking application server, the login state of the current user account stored in the social networking application server may be replaced with the login state included in the filtering request. In this way, the login state of the current user account may be quickly set, which is convenient to set the login state of the current user account.

If the filtering request initiated by the social networking application client does not include a login state of the current user account, a login state of the current user account corresponding to user information of the determined current user account may be found by the social networking application server in local storage based on user information of the current user account included in the filtering request.

Operation 203: The social networking application server determines at least one first target interaction object satisfying a preset condition associated with the login state of the current user account, from the social networking application (including from the plurality of interaction objects), and pushes the at least one first target interaction object to the social networking application client, and the social networking application client may hide the avatars currently being displayed and functional operation control elements (including the filtering control element), and displays an avatar of the at least one first target interaction object.

Specifically, if the login state of the current user account is an interaction-type login state, the first target interaction object satisfying the preset condition associated with the login state of the current user account determined by the social networking application server may include at least one of the following: a user account having the same login state as the current user account; or a chat scene associated with the login state of the current user account. For example, the login state of the current user account is "dancing", the determined first target interaction object may include a user account whose login state is set with "dancing", a virtual scene "xx dancing hall" or "xx pub" in which a chat session has been created, and/or the like.

If the login state of the current user account is a content-type login state, the first target interaction object satisfying the preset condition associated with the login state of the current user account determined by the social networking application server may include at least one of the following: a user account having the same login state as the current user account, or a topic associated with the login state of the current user account. For example, the login state of the current user account is "reading comics", the determined first target interaction object may include a user account whose login state is set with "reading comics"; a topic associated with "comics" includes multimedia files associated with comics and published by a plurality of user accounts, and/or the like.

Operations 201 to 203 are a process of determining the target interaction object for the filtering request initiated by the social networking application client. In some specific embodiments, the social networking application client may further initiate a user matching process to the social networking application server. Specifically,

The social networking application client may further include a matching control element in a displayed social networking application interface. When the current user performs an operation on the matching control element, the social networking application client initiates a matching request. When receiving the matching request sent by the social networking application client, the social networking application server determines, based on the login state of the current user account carried in the matching request, an interaction object (specifically, another user account) associated with the login state of the current user account, and pushes the interaction object to the social networking application client, so that the social networking application client may directly initiate a session request with a social networking application client of the interaction object.

In the embodiments, because the social networking application server determines the target interaction object based on the login state of the current user account, the current user account may dynamically set the login state, to define a target interaction object to be pushed to the social networking application client logged in with the current user account. This is convenient for the current user account to find a corresponding interaction object based on a requirement of the current user account, avoids a plurality of repeated matching operations required for matching an interaction object meeting the requirement of the current user account, and improves accuracy in a process of determining the target interaction object.

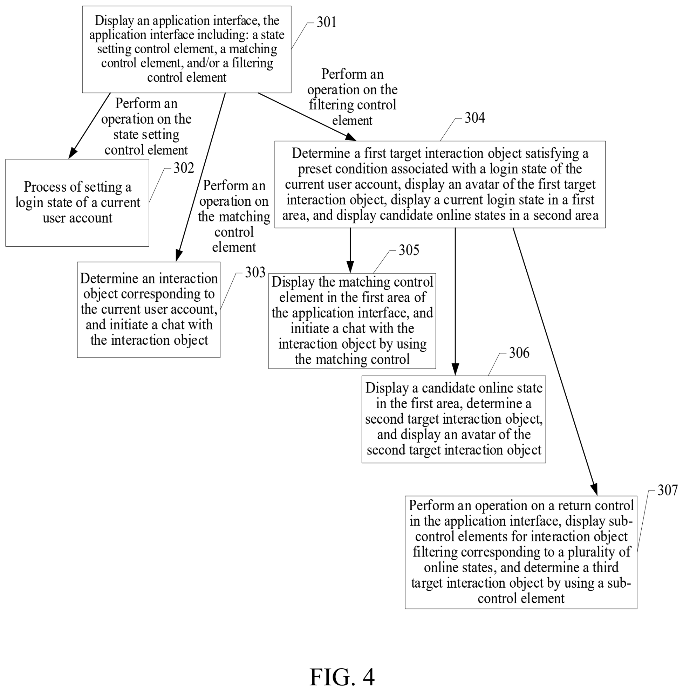

The following describes the avatar-based data interacting method in the present disclosure by using a specific application example. The avatar-based data interacting method in the embodiments is applicable to a social networking application system. Specifically, as shown in FIG. 4, the avatar-based data interacting method in the embodiments includes the following operations.

Operation 301: A social networking application system displays an application interface of a social networking application, where the application interface includes a personal avatar of a current user account, the quantity of users online in the social networking application, and avatars of interaction objects, such as avatars of user accounts, chat scenes, and topics, each avatar is associated with an interaction control element corresponding to the interaction object of each avatar, and the application interface further includes: a state setting control element, a matching control element, a filtering control element, and/or the like. The application interface may further include a background space. The current user account may be associated with a first avatar, and avatars of interaction objects may be second avatars.

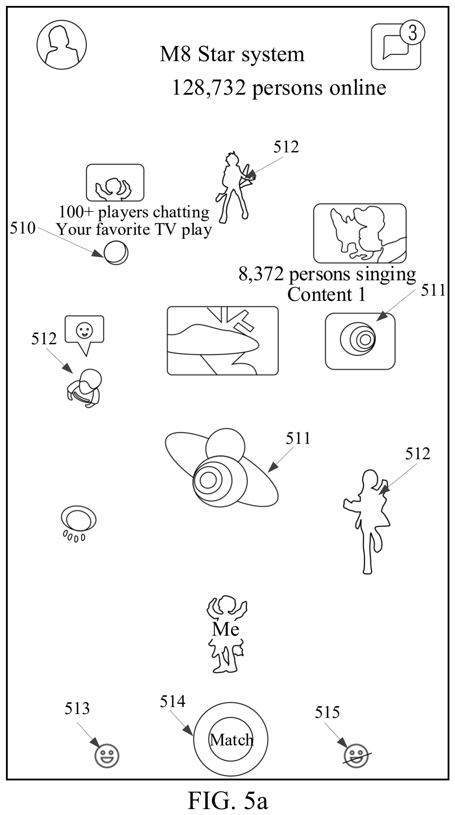

For example, as shown in FIG. 5a, the application interface displayed by the social networking application system may use a universe model as a background space, display user accounts in the interaction objects by using three-dimensional characters, and display chat scenes or topics by using planet models. As shown in FIG. 5a, the application interface includes a planet model 510 of a topic, a planet model 511 of a chat scene, and avatars 512 of user accounts. An arrangement sequence of displaying the avatars of the user accounts in the background space may be based on sorting logic: mutual friends, people followed, followers, and strangers of the current user account. The current user may slide a screen left and right for viewing. The social networking application system loads an avatar of a new interaction object. When the screen is slid for more than a preset number of times (for example, three times), the social networking application system may return to display avatars of interaction objects that were displayed on the application interface just before the screen was slid for the first time. In addition, three control elements at the bottom of the application interface are sequentially from left to right: a state setting control element 513, a matching control element 514, and a filtering control element 515.

An interaction control element corresponding to an avatar of a user account may be the avatar of the user account, or may be a user operation control element above the avatar of the user account. An interaction control element corresponding to an avatar of a topic may be a picture of the topic above a planet model. An interaction control element corresponding to an avatar of a chat scene may be a picture of the chat scene above a planet model.

Operation 302: When the current user performs an operation on the state setting control element in the application interface, the social networking application system enters a process of setting a login state of the current user account. Specifically, the application interface switches to a state setting interface. The state setting interface includes a state control element. When the current user performs an operation on the state control element, the social networking application system displays a login state selecting interface. The login state selecting interface may include a plurality of candidate login states, a customization control element for customizing a login state, and/or an intelligently matched login state. The current user determines a login state through the login state selecting interface, and the social networking application system uses the login state determined through the login state selecting interface as the login state of the current user account.

If the current user has not determined any login state on the login state selecting interface, the social networking application system may determine a default login state (for example, a floating state) as the login state of the current user account.

Operation 303: When the current user performs an operation on the matching control element in the application interface, the social networking application system determines an interaction object (which may be another user account) satisfying a preset condition associated with the login state of the current user account, and then initiates a session process with the interaction object.

In this case, when the social networking application system determines the interaction object based on the matching control element, a user account may be determined based on other information, instead of being determined through matching based on the login state of the current user account.

Operation 304: When the current user performs an operation on the filtering control element in the application interface, the social networking application system determines at least one first target interaction object satisfying a preset condition associated with the login state of the current user account, and the social networking application system hides avatars and functional operation control elements, including the filtering control element, state setting control element, matching control element, and/or the like, currently being displayed in the application interface, displays an avatar of the at least one first target interaction object, displays the login state of the current user account in a first area of the application interface, and displays a plurality of candidate login states (such as watching television, reading comics, and skateboarding) in a neighboring area of the first area, namely, a second area.

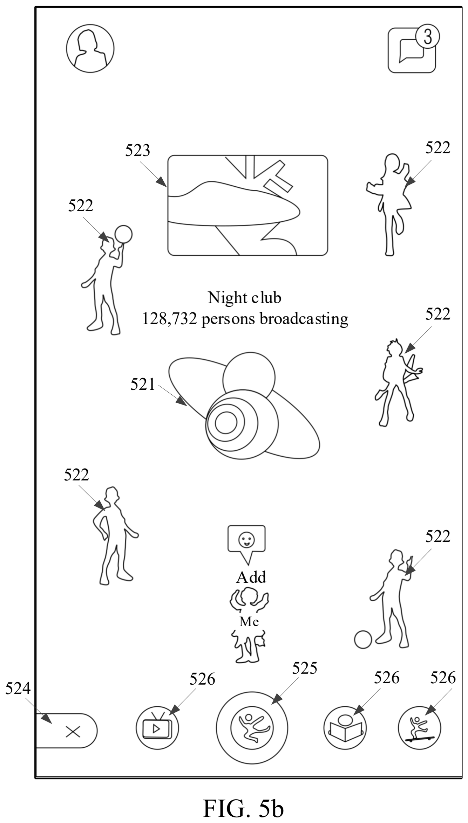

Specifically, the social networking application system may determine, based on a type of the login state of the current user account, the at least one first target interaction object satisfying the preset condition associated with the login state of the current user account. If the login state of the current user account is an interaction-type login state, the at least one first target interaction object determined by the social networking application system may include: a user account(s) having the same login state as the current user account; and/or a related chat scene(s). For example, an application interface shown in FIG. 5b displays a planet model 521 of a chat scene related to a login state "discoing" of the current user account and avatars 522 of some other user accounts. Specifically, the planet model of the chat scene displayed is associated with: an interaction control element (an image object 523 floating above the planet model) configured to join the chat scene and an interaction control element (a body 521 of the planet model) configured to view details of the chat scene, and a displayed background space (including a background picture and background music) corresponds to the login state "discoing" of the current user account. When the current user taps the body (the control element configured to view details of the chat scene) 521 of the planet model, the social networking application system displays a details interface of the corresponding chat scene, and when the current user taps the image object 523 floating above the planet model, the current user joins the chat scene. When the current user taps an avatar 522 of a user account, the current can view personal information and a recently posted login state of the user account, and can perform private chat, voice, video, or expression interaction with the user account. In addition, when the first target interaction objects associated with the login state of the current user account are determined, the following may be displayed at the bottom of the application interface: a return control element 524, the login state 525 of the current user account, and/or candidate login states 526 in the second area.

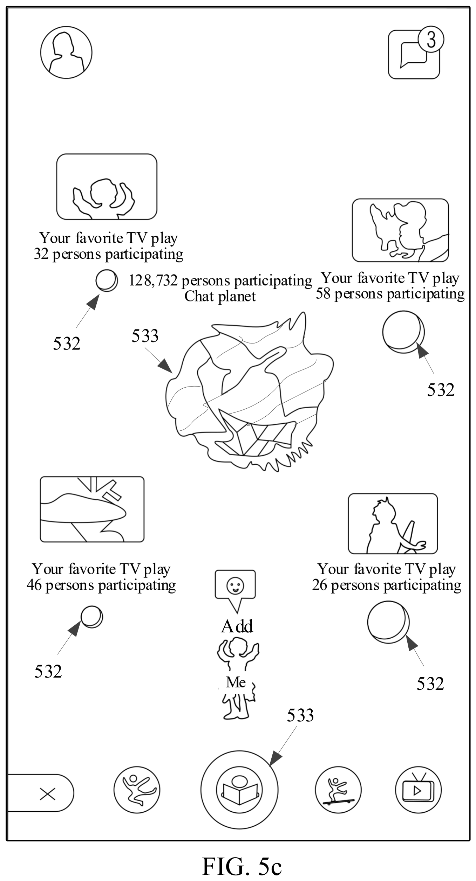

If the login state of the current user account is a content-type login state, the at least one first target interaction object determined by the social networking application system may include at least one of the following: a user account (s) having the same login state as the current user account, or a related topic(s). For example, an application interface shown in FIG. 5c displays an avatar 531 of a topic associated with a login state "reading comics" 533 of the current user account and avatars 532 of sub-topics included in the topic. Specifically, each of the avatars is associated with: an interaction control element (a planet model 531 or 532) for viewing details of the topic or any sub-topic, and a displayed background space (including a background picture and background music) of the planet corresponds to the login state "reading comics" of the current user account. When the current user taps the planet model 531 or 532, the application interface displays a details interface of a corresponding topic or sub-topic, and the details interface includes information about user accounts associated with the topic or sub-topic, content posted by user accounts, and content participating in discussion of the topic or sub-topic. In this way, the current user account may randomly match a user account that has discussed the topic or a sub-topic for voice/video communication.

Operation 305: After the displaying of the login state in the first area of the application interface has reached a preset time (for example, one second), the social networking application system replaces the login state of the current user account displayed in the first area with the matching control element. In this way, the current user account may perform an operation on the matching control element, and the social networking application system determines an interaction object associated with the login state of the current user account, and then initiates a session process with the interaction object.

Operation 306: When the current user performs an operation in the second area of the application interface, or moves his/her finger from the first area to the second area, the social networking application system displays, in the first area, a candidate login state previously displayed in the second area, determines a related second target interaction object based on the candidate login state, and displays an avatar of the second target interaction object in the application interface.

In this case, if the social networking application system finds that a login state of the current user account stored in the system is inconsistent with the candidate login state displayed in the first area, the social networking application system may replace the stored login state of the current user account with the candidate login state displayed in the first area.

Operation 307: In addition to the login state of the current user account in the first area and the candidate login states in the second area, the social networking application interface further includes a return control element. When the current user performs an operation on the return control element, the social networking application system switches from the current application interface to a sub-control element panel for interaction object filtering, and displays, in the sub-control element panel, a plurality of sub-control elements each corresponding to a login state for interaction object filtering. When the current user performs an operation on any sub-control element, the social networking application system collapses the sub-control element panel. In addition, if a login state corresponding to the operated sub-control element is consistent with the login state of the current user account, the social networking application system returns to display the avatar(s) of the at least one first target interaction object. If the login state corresponding to the operated sub-control element is inconsistent with the login state of the current user account, one or more third target interaction objects related to the login state corresponding to the operated sub-control element may be determined, and an avatar(s) of the one or more third target interaction objects may be displayed in the social networking application interface.

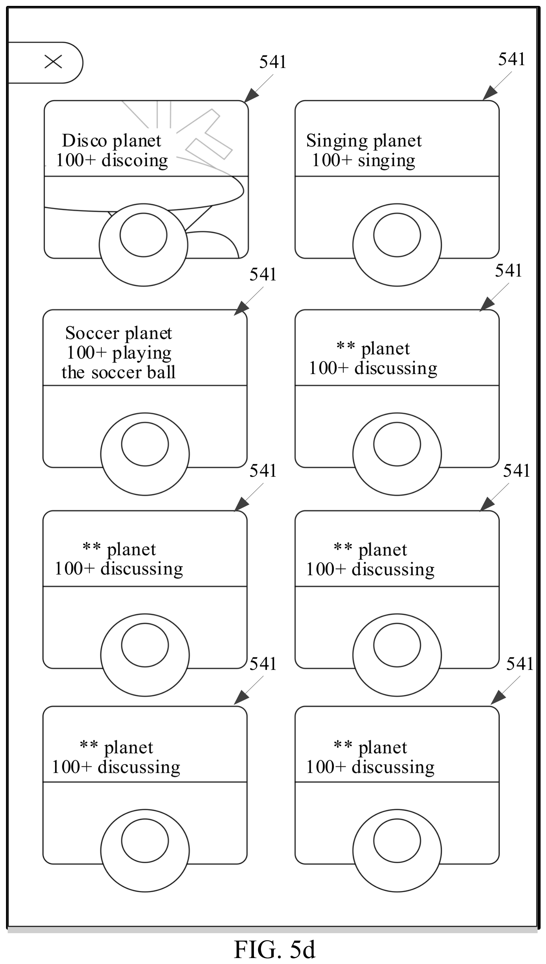

For example, the social networking application interface shown in FIG. 5b includes the return control element 524. When the current user performs an operation on the return control element 524, the social networking application system switches to the sub-control element panel for interaction object filtering (as shown in FIG. 5d). The sub-control element panel shown in FIG. 5d includes sub-control elements 541 for interaction object filtering of eight login states, in which a sub-control element corresponding to a login state "go to disco" of the current user account preset by the current user in the system is ranked first, and other sub-control elements are sub-control elements corresponding to other login states in the social networking application system.

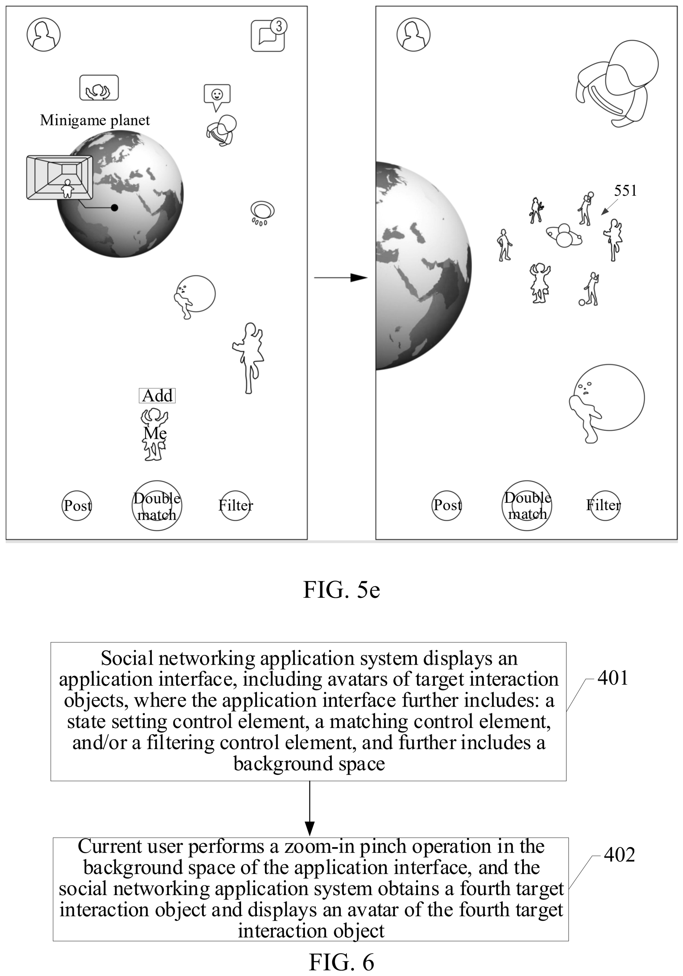

In some specific embodiments, as shown in FIG. 6, another avatar-based data interacting method in the embodiments includes the following operations.

Operation 401: A social networking application system displays an application interface of a social networking application logged in with a current user account, where the application interface includes a personal avatar of a current user account, the quantity of users online in the social networking application, and an avatar of each target interaction object, such as an avatar of a user account, a chat scene, or a topic, and the application interface further includes: a state setting control element, a matching control element, a filtering control element, and the like. In addition, the social networking application interface includes a background space.

Operation 402: When the current user performs a zoom-in pinch operation in the background space of the application interface, the social networking application system obtains one or more fourth target interaction objects, and displays one or more avatars of the one or more fourth target interaction objects in the application interface.

For example, as shown in FIG. 5e, when the zoom-in pinch operation is performed in a universe space model (as the background space) shown in the application interface, the social networking application system includes the interaction objects with their avatars being displayed into a star system object, displays the avatars of these interaction objects by using a star system model where the avatars of these interaction objects are shown around a planet model, explores in the universe space model and finds a new star system object 551 (including one or more new target interaction objects as the one or more fourth target interaction objects), and displays the one or more avatars of the one or more fourth target interaction objects by using another star system model 551 where the one or more avatars of the one or more fourth target interaction objects are shown around another planet model. During exploration in the universe space model using the zoom-in pinch operation, an effect that another star system model 551 is gradually enlarged, becoming clearer and finally shown in the middle of the application interface will be presented.

In some specific application embodiments, to implement the foregoing object filtering and displaying of the avatar of the interaction objects by the social networking application system, the social networking application system may implement the following processing on a data layer.

When the application interface of the social networking application is displayed, the following may be pulled: planet displaying information, three-dimensional avatars of user accounts, information about the current user account, topic information, chat scene information, and/or the like; a two-dimensional image, an avatar, and selected interaction information of each piece of planet information; a two-dimensional image of an avatar, the avatar, and a login state of each user, where an action identifier of a three-dimensional avatar of each user may be positioned by using an identifier of the login state and an avatar identifier of the user; and a default login state of each user account, for example, a floating login state; and when the social networking application system needs to display a new interaction object again, the social networking application system may clean data in a memory and reload information about the new interaction object to the memory.

In addition, the social networking application system may display the avatar of each target interaction object in the following manner.

The social networking application system may first load a two-dimensional image of each target interaction object, then dynamically load a three-dimensional model of each target interaction object, and bind the three-dimensional model with an interaction control element corresponding to each target interaction object. In this way, a displaying speed of each target interaction object can be improved, and it is convenient for the current user account to perform an operation on the target interaction object. Further, when split-screen displaying the avatars of the target interaction objects, the social networking application system may use a split-screen lazy loading manner. Specifically, the social networking application system displays avatars of some target interaction objects on a displaying screen. When the current user performs a refresh operation on the application interface, the social networking application system obtains new target interaction objects based on the refresh operation of the current user, and displays avatars of the new target interaction objects. In this way, frame freezing in a sliding process of the displaying screen can be greatly reduced, and memory occupation can be reduced.

Further, when displaying the avatar of each target interaction object, the social networking application system may calculate a point position of the avatar of each target interaction object based on a hexagon principle of a displaying screen layout, to place the avatar of each target interaction object at a corresponding position on the displaying screen based on the point position of each target interaction object.

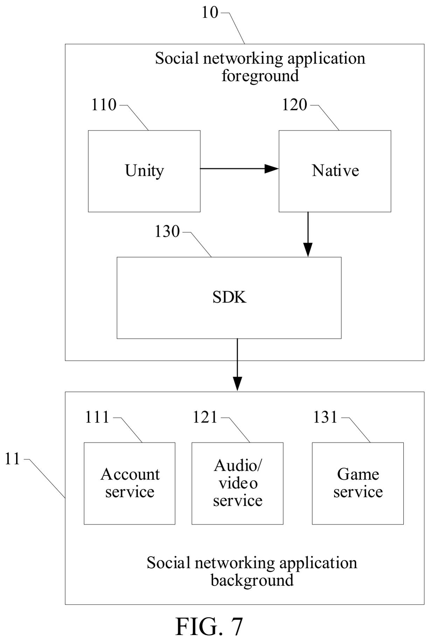

In some specific embodiments, to implement real-time session-based interaction with any user account, as shown in FIG. 7, it may be set that the social networking application system may include: a social networking application foreground 10 and a social networking application background 11 that include the following structures. The social networking application foreground 10 and the social networking application background 11 may be deployed in the same terminal device. Alternatively, the social networking application foreground 10 may be deployed in a social networking application client, and the social networking application background 11 is deployed in a social networking application server.

Specifically, the social networking application foreground 10 includes a user interface (Unity) 110, an interface (Native) 120, and a software development kit (SDK) 130. Three-dimensional rendering of most scenes and users is implemented by using the Unity 110, and three-dimensional rendering of an interface (UI) component is implemented by using the Native 120. Real-time voice/video communication is performed by the Native 120 invoking the SDK 130, and then a corresponding request is initiated to the social networking application background 11 by using the SDK 130.

In this way, device performance can be more efficiently used by using the Unity 110 and the Native 120, and performance consumption and operation frame freezing of the social networking application foreground 10 can be reduced, thereby improving user experience.

The social networking application background 11 includes an account service 111, a media service 121, a game service 131, and the like, to respond to a related request of the social networking application foreground 10.

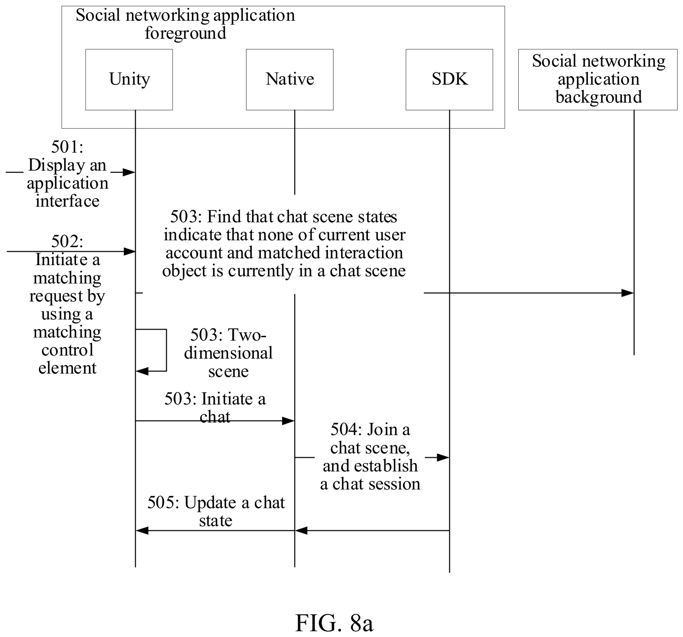

Specifically, in one example, as shown in FIG. 8a, real-time session-based interaction between a current user account and an interaction object (namely, a user account) may be implemented through the following operations.

Operation 501: The social networking application foreground 10 displays an application interface of a social networking application logged in with a current user account, where the application interface includes a personal avatar of the current user account, the quantity of users online in the social networking application, and avatars of a plurality of interaction objects, such as avatars of user accounts, chat scenes, topics, and/or the like, each avatar is associated with an interaction control element of the interaction object, and the application interface further includes: a state setting control element, a matching control element, a filtering control element, and/or the like.

Operation 502: When the current user performs an operation on the matching control element in the application interface, the social networking application foreground 10 initiates a matching request to the social networking application background 11, and after receiving the matching request, the social networking application background 11 first determines a login state of the current user account, determines an interaction object having the same login state as the current user account, and pushes information of the interaction object to the social networking application foreground 10.

Operation 503: When the social networking application foreground 10 receives the information of the interaction object (e.g., a user account) pushed by the social networking application background 11, the Unity 110 of the social networking application foreground 10 first determines, from the social networking application background 11 by using the SDK 130, chat scene states respectively corresponding to the current user account and the interaction object, and if the chat scene state of the current user account indicates that the current user account is currently not in any chat scene, and the chat scene state of the interaction object indicates that the interaction object is currently not in any chat scene, the Unity 110 directly displays a two-dimensional image of a chat scene, and invokes the Native 120 to initiate a session.

Operation 504: The Native 120 invokes the SDK 130 to establish the chat scene, adds the current user account and the interaction object to the created chat scene, and establishes a chat session with the interaction object.

Operation 505: After successfully establishing the chat session, the SDK 130 instructs, through callback, the Native 120 to update the current state of the chat session between the user account and the interaction object, and the Native 120 calls back the Unity 110, to update the chat state in the interface to real-time interaction of being in a chat.

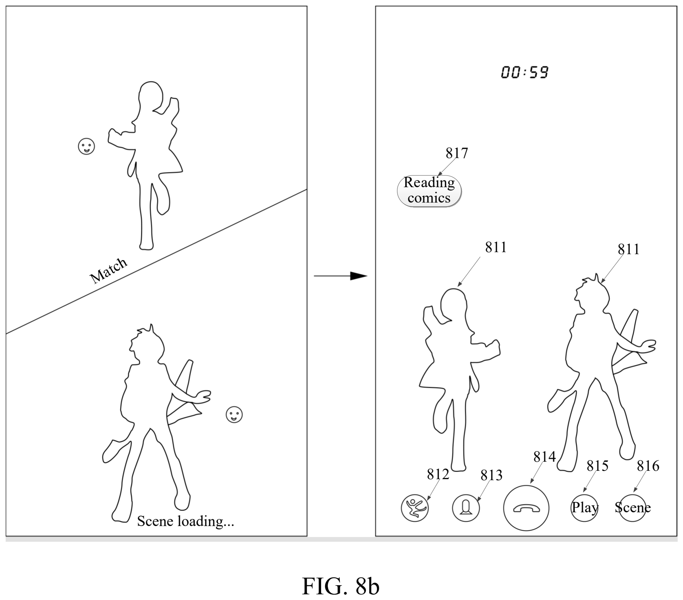

For example, as shown in the application interface of the current user account in FIG. 8b, when the current user initiates user matching by using the matching control element, the social networking application foreground 10 of the current user account displays a picture of "Scene loading" (a picture on the left in FIG. 8b) in the social networking application interface in a process of performing operations 502 to 505. After operation 505 is performed, the chat state is updated in the social networking application foreground 10, and the social networking application foreground 10 displays a chat scene including avatars 811 of the current user account and the interaction object, displays a login state 817 of each user account, for example, reading comics, and further displays interaction control elements. For example, the interaction control elements from left to right at the bottom of the application interface are: an inviting control element (an animated character) 812, a voice/video call control element 813, a hang-up control element 814, a game control element "Play" 815, and a chat scene changing control element "Scene" 816. In this way, by using the interaction control elements, social networking application foregrounds 10 of the current user account and the interaction object can perform various types of interaction, such as real-time voice/video communication, game playing, and changing chat scenes.

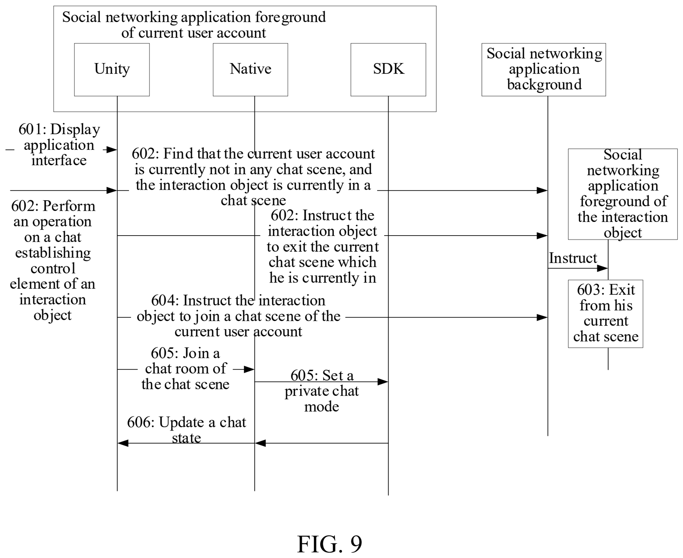

In another example, as shown in FIG. 9, the real-time session-based interaction between the current user account and the interaction object may be implemented through the following operations.

Operation 601: The social networking application foreground 10 displays an application interface of a social networking application logged in with the current user account, where the application interface includes a personal avatar of the current user account, the quantity of users online in the social networking application, and avatars of a plurality of interaction objects, such as avatars of user accounts, chat scenes, topics, and/or the like, each avatar is associated with an interaction control element of the interaction object, and the application interface further includes: a state setting control element, a matching control element, a filtering control element, and/or the like. The social networking application interface further includes a background space.

Operation 602: When the current user account taps an avatar of a user account displayed in the application interface, the social networking application foreground 10 displays a chat establishing control element corresponding to the user account. When the current user performs an operation on the chat establishing control element, the Unity 110 of the social networking application foreground 10 first determines, from the social networking application background 11 by using the SDK 130, chat scene states respectively corresponding to the current user account and the user account( as an interaction object). If the current user account is currently not in any chat scene, and the interaction object is currently in a chat scene, the Unity 110 instructs, through the social networking application background 11, a social networking application foreground 10 of the interaction object to exit the current chat scene of the interaction object.

Operation 603: If the interaction object agrees to exit the current chat scene of the interaction object, a Unity 110 included in the social networking application foreground 10 of the interaction object invokes a Native 120 to exit the current chat scene of the interaction object.

Operation 604: The Unity 110 included in the social networking application foreground 10 of the current user account invokes an interface of the social networking application background to add the interaction object to a chat scene of the current user account, where if the current user account is not in any chat scene currently, the social networking application foreground 10 may first establish a chat scene and then add the interaction object to the chat scene.

Operation 605: The Unity 110 of the social networking application foreground 10 of the current user account invokes the Native 120 to add the interaction object to a session room in the current chat scene, that is, establishing a chat sub-session to the interaction object, and set a private chat mode of the chat sub-session.

Operation 606: The Native 120 returns a current chat state between the user account and the interaction object to the Unity 110, to update the chat state in the interface.

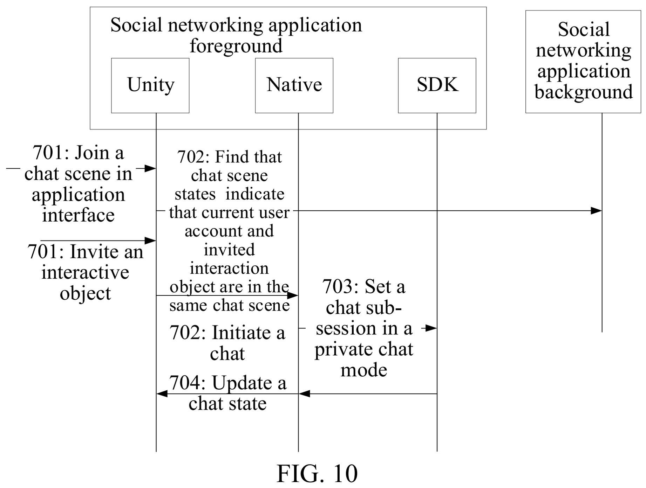

In another example, as shown in FIG. 10, the real-time session-based interaction between a current user account and a user account may be implemented through the following operations.

Operation 701: The social networking application foreground 10 displays an application interface of the social networking application, where the application interface includes a personal avatar of the current user account, the quantity of users online in the social networking application, and avatars of a plurality of interaction objects, such as avatars of user accounts, chat scenes, topics, and/or the like, each avatar is associated with an interaction control element of the interaction object, and the application interface further includes: a state setting control element, a matching control element, a filtering control element, and/or the like. The application interface further includes a background space.

When the current user taps an avatar of a chat scene displayed in the application interface, the social networking application foreground 10 joins the chat scene. The social networking application foreground 10 displays the chat scene and an inviting control element. The chat scene includes the avatars of the plurality of interaction objects. When the current user invites an interaction object in a list of user accounts to be invited by using the inviting control element, the following operation 702 is performed.

Operation 702: The Unity 110 of the social networking application foreground 10 determines, from the social networking application background 11 by using the SDK 130, chat scene states respectively corresponding to the current user account and the invited interaction object, and if the current user account and the invited interaction object are in the same chat scene, the Unity 110 invokes the Native 120 to initiate a session.

Operation 703: The Native 120 invokes the SDK 130 to set a chat sub-session between the current user account and the invited interaction object in the chat scene, where a mode of the chat sub-session is a private chat mode.

Operation 704: The Native 120 returns a current chat state between the user account and the invited interaction object to the Unity 110, to update the chat state in the interface.

When operation 702 in which it is determined that current user account and the invited interaction object are in the same chat scene is performed, the Unity 110 further performs a user prompt. The user prompt is configured to prompt that the user account (the invited interaction object) invited by the current user account is currently in the chat scene of the current user account. After operation 704 is performed, the social networking application system further switches to displaying at least one interaction control element (such as a voice/video call control element, a game playing control element, and/or a friend-adding control element) for interacting with the invited interaction object. By using the interaction control elements, the social networking application system directly performs real-time interaction with the invited interaction object.

In this way, a voice/video session between users may be established in various chat scene states of the users, to implement real-time interaction between the users and expand a range of interaction between the users.

The following describes the avatar-based data interacting method in the present disclosure by using another specific application example. The social networking application system in the embodiments of the present disclosure is mainly a distributed system 100. The distributed system may include a client 300 and a plurality of nodes 200 (computing devices in any form in an access network, such as a server and a user terminal). The client 300 is connected to the nodes 200 in a network communication form.

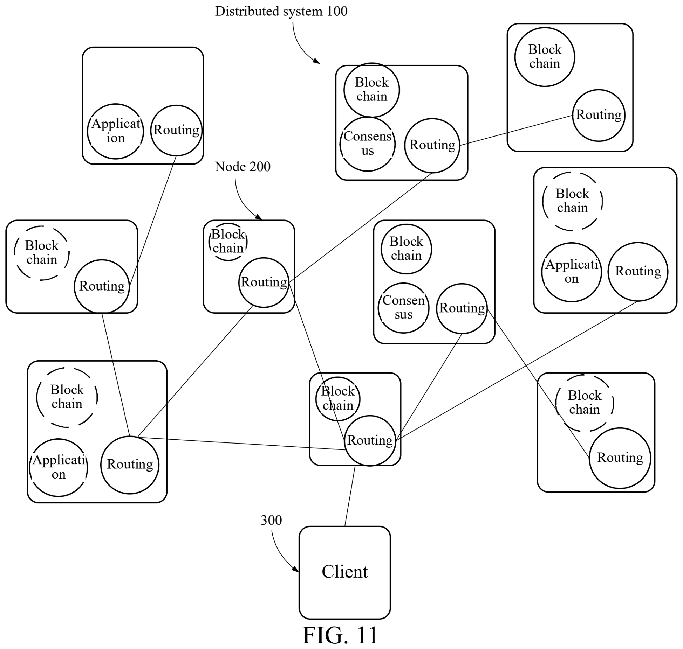

An example in which the distributed system is a blockchain system is used. FIG. 11 is a schematic structural diagram of a distributed system 100 used in a blockchain system according to all embodiments of the present disclosure. The distributed system 100 includes a plurality of nodes 200 (computing devices in any form in an access network, such as a server and a user terminal) and a client 300. A peer-to-peer (P2P) network is formed between the nodes. The P2P protocol is an application-layer protocol running over a transmission control protocol (TCP). In the distributed system, any machine such as a server or a terminal may be added to become a node. The node includes a hardware layer, an intermediate layer, an operating system layer, and an application layer.

Referring to functions of nodes in the blockchain system shown in FIG. 11, the functions include the following.
(1) Routing: it is a basic function of a node, and is configured for supporting communication between nodes.
   In addition to the routing function, the node may further have the following functions.
(2) Application: it is deployed in a blockchain, configured to implement a specific service based on an actual service requirement, record data associated with function implementation to form recorded data, add a digital signature to the recorded data to represent a source of task data, and send the recorded data to another node in the blockchain system, so that the another node adds the recorded data to a temporary block when a source and integrity of the recorded data is successfully verified.

For example, the service implemented by the application includes code for implementing avatar-based data interacting functions, and the avatar-based data interacting functions mainly include:
displaying an application interface of a social networking application logged in with a current user account, where the application interface includes a filtering control element and a plurality of avatars, and each of the plurality of avatars corresponds to one of a plurality of interaction objects, and is associated with at least one interaction control element; in response to a triggering operation performed on the filtering control element, determining at least one first target interaction object satisfying a preset condition associated with a login state of the current user account from the social networking application, including from the plurality of interaction objects,, where the login state of the current user account is configured to represent a state of an avatar of the current user account or a state of the current user; and displaying an avatar of the at least one first target interaction object.

(3) Blockchain: it includes a series of blocks that are consecutive in a sequence of generation time. Once a new block is added to the blockchain, the new block is no longer removed. The block records recorded data submitted by a node in the blockchain system.

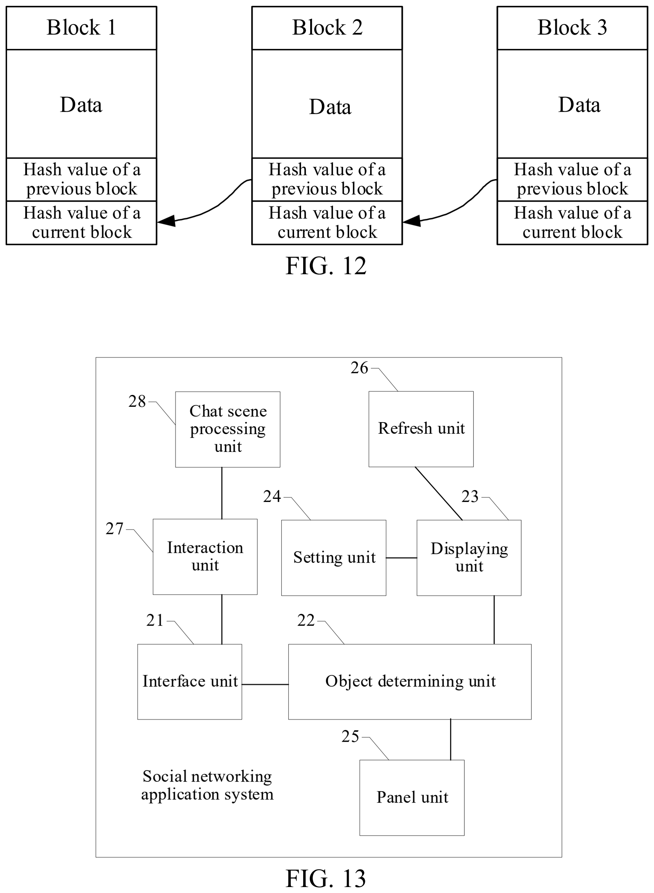

FIG. 12 is a schematic diagram of a block structure according to all embodiments of the present disclosure. Each block includes a hash value of a transaction record stored in the block (or a hash value of the block) and a hash value of a previous block. Blocks are connected by using hash values to form a blockchain. In addition, the block may further include information such as a timestamp when the block is generated. The blockchain is essentially a decentralized database, and is a string of data blocks generated through association by using a cryptographic method. Each data block includes related information, to verify validity (anti-counterfeiting) of information thereof and generate a next block.

All embodiments of the present disclosure further provide a social networking application system. A schematic structural diagram of the social networking application system is shown in FIG. 13, and the social networking application system may specifically include the following units.

An interface unit 21 is configured to display an application interface of a social networking application logged in with a current user account, where the application interface includes a filtering control element and a plurality of second avatars, each of the plurality of second avatars corresponding to one of a plurality of interaction objects in the social networking application, and each of the plurality of second avatar being associated with at least one interaction control element, the current user account being associated with a first avatar.

An object determining unit 22 is configured to, in response to a triggering operation performed on the filtering control element displayed by the interface unit 21, determine at least one first target interaction object, satisfying a preset condition associated with a login state of the current user account, from the social networking application (including from the plurality of interaction objects), where the login state of the current user account is configured for indicating a state of the first avatar of the current user account or a state of the current user.

If the login state of the current user account is an interaction-type login state, the object determining unit 22 may determine the at least one first target interaction object satisfying the preset condition associated with the login state of the current user account, from the social networking application, and the login state of the current user account is configured for indicating the state of the first avatar of the current user account or the state of the current user.

A displaying unit 23 is configured to hide the filtering control element displayed in the social networking application interface, and display an avatar of the at least one first target interaction object determined by the object determining unit 22.

The displaying unit 23 is specifically configured to display a two-dimensional image of the at least one first target interaction object, and load a three-dimensional model of the at least one first target interaction object based on the two-dimensional image of the at least one first target interaction object; and bind the three-dimensional model with an interaction control element corresponding to the at least one first target interaction object, and perform an interaction operation with the at least one first target interaction object when the interaction control element receives a triggering operation.

In some specific embodiments of the present disclosure, interaction objects include user accounts, and the displaying unit 23 is further configured to display the login state of the current user account in a first area of the application interface; and after the displaying of the login state in the first area has reached a preset time, replace the login state of the current account in the first area with a matching control element, the matching control element is configured to find, based on a preset condition, a second user account to interact with the current user account from the social networking application.

Further, the displaying unit 23 is further configured to display at least one candidate login state in a second area of the application interface, the first area and the second area are adjacent areas, and display a candidate login state in the first area when a user operation of moving from the first area to the second area is detected, or when a triggering operation performed on the second area is detected; and the object determining unit 22 is further configured to determine a related second target interaction object based on the displayed candidate login state, and then the displaying unit 23 is further configured to display an avatar of the second target interaction object in the application interface.

In this case, the social networking application system in the embodiments of the present disclosure may further include: a setting unit 24, configured to replace, if the candidate login state displayed in the first area by the displaying unit 23 is not consistent with the login state of the current user account, the login state of the current user account with the candidate login state displayed in the first area.

In some specific embodiments of the present disclosure, the social networking application system further includes:
a panel unit 25, configured to, in response to the triggering operation performed on the filtering control element in the application interface displayed by the interface unit 21, switch from displaying the application interface to displaying a sub-control element panel for interaction object filtering, and display, on the sub-control element panel, a plurality of sub-control elements for interaction object filtering each corresponding to one of a plurality of preset login states; and hide the sub-control element panel in response to an operation performed on a sub-control element of the plurality of sub-control elements, and if a login state corresponding to the operated sub-control element is consistent with the login state of the current user account, perform the operation of determining the at least one first target interaction object by the object determining unit 22. Further, if the login state corresponding to the operated sub-control element is inconsistent with the login state of the current user account, the object determining unit 22 is instructed to determine a third interaction object related to the login state corresponding to the operated sub-control element, and the displaying unit 23 displays an avatar of the third interaction object in the application interface.

In some embodiments, the interaction object may be a user account, a topic, or a chat scene; and if the login state of the current user account is an interaction-type login state, the at least one first target interaction object satisfying the preset condition associated with the login state of the current user account includes at least one of the following: a user account having the same login state as the current user account, or a chat scene related to the login state of the current user account; and if the login state of the current user account is a content-type login state, the determined at least one first target interaction object satisfying the preset condition associated with the login state of the current user account includes at least one of the following: a user account having the same login state as the current user account, or a topic related to the login state of the current user account.

In some embodiments, the social networking application system further includes: a refresh unit 26, configured to: when the application interface is displayed, where the application interface includes a background space, when user operation information in the background space of the application interface is detected, and the user operation information is a preset refresh operation gesture, obtain one or more fourth interaction objects in response to the user operation information, and display one or more avatars of the one or more fourth interaction objects on the application interface by using the displaying unit 23.

Further, the setting unit 24 is further configured to: when the application interface further includes a state setting control element, switch from displaying the application interface to displaying a state setting interface in response to an operation performed on the state setting control element, where the state setting interface includes a state control element; display a login state selecting interface in response to an operation performed on the state control element, where the login state selecting interface includes at least one of the following: a plurality of candidate login states, a customization control element for customizing a login state, or an intelligently matched login state; and determine a login state determined from the login state selecting interface as the login state of the current user account.

An interaction unit 27 is configured to display a chat establishing control element in response to an operation performed on the second avatar of the interaction object, where the interaction object displayed in the application interface displayed by the interface unit 21 includes a user account, and the chat establishing control element is configured to trigger real-time interaction with the interaction object corresponding to the second avatar; and in response to an operation on the chat establishing control element, create and display a first chat scene and an inviting control element, and display, in the first chat scene, the first avatar corresponding to the current user account and the second avatar corresponding to the interaction object interacting with the current user account, where the inviting control element is configured to invite at least one interaction object to join the first chat scene, when the at least one interaction object is currently in another chat scene or is currently not in any chat scene.

The interaction unit 27 is further configured to: when the application interface further includes a matching control element, after the application interface is displayed, determine, in response to an operation performed on the matching control element displayed on the application interface, the interaction object having the same login state as the current user account, and perform the operation of displaying the first chat scene.

Further, the social networking application system of the embodiments further includes:
a chat scene processing unit 28, configured to: before the interaction unit 27 displays the first avatar corresponding to the current user account and the second avatar corresponding to the interaction object in the first chat scene, create a second chat scene if a chat scene state of the current user account indicates that the current user account is currently not in any chat scene, and a chat scene state of the interaction object indicates that the interaction object is not in any chat scene; and add the current user account and the interaction object to the second chat scene, and establish a chat session between the current user account the interaction object; and if the chat scene state of the interaction object indicates that the interaction object is currently in a chat scene, and the chat scene state of the current user account indicates that the current user account is currently not in any chat scene, instruct the interaction object to exit the chat scene which the interaction object is currently in; and create a third chat scene if the interaction object agrees to exit the current chat scene, add the current user account and the interaction object to the created third chat scene, and establish a chat session between the current user account and the interaction object.

Further, the interaction unit 27 is further configured to pop up an invitation selecting control element, where the invitation selecting control element is configured for the current user account to select agreeing or refusing to join a chat scene of an inviting user account; and if a chat scene that the current user account is currently in is being displayed, switch from the chat scene of the current user account to the chat scene of the inviting user account when information about agreeing to join the chat scene of the inviting user account is received. In this way, the chat scene processing unit 28 is further configured to: when the interaction unit 27 receives the information about agreeing to join the chat scene of the inviting user account, if the chat scene state of the current user account indicates that the current user account is not in any chat scene, join the chat scene of the inviting user account; and if chat scene states of the current user account and the inviting user account indicate that the current user account and the inviting user account are in different chat scenes, the current user account exits a current chat scene, and joins the chat scene of the inviting user account.

In the social networking application system in the embodiments, the displayed social networking application interface includes the filtering control element and the avatar of each interaction object. In this way, through the operation performed on the filtering control element, the object determining unit 22 determines the at least one first target interaction object associated with the login state of the current user account, and the displaying unit 23 collapses the filtering control element and display the avatar of the at least one first target interaction object. The social networking application system determines the target interaction object based on the login state of the current user account. In this way, the current user account may dynamically set the login state, to define the determined target interaction object. This is convenient for the user to find a corresponding interaction object based on a requirement of the user, avoids a plurality of repeated matching operations required for matching an interaction object meeting the requirement of the user, and improves accuracy in a process of determining the target interaction object. In addition, the avatar displayed in the social networking application interface is associated with the interaction control element, so that it is convenient for the user to initiate an interaction operation with a specific interaction object by using the interaction control element, to improve human-computer interaction efficiency in an interacting process of the user.

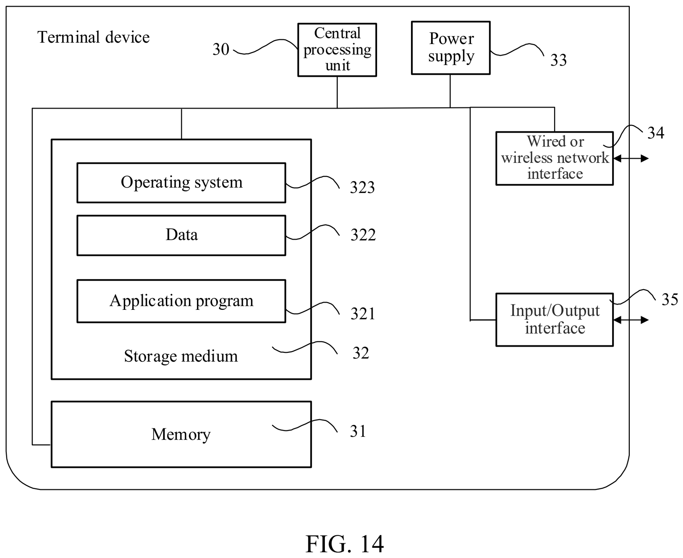

All embodiments of the present disclosure further provide a terminal device, and a schematic structural diagram of the terminal device is shown in FIG. 14. The terminal device may vary greatly due to different configuration or performance, and may include one or more central processing units (CPUs) 30 (for example, one or more processors), a memory 31, and one or more storage media 32 (for example, one or more mass storage devices) that stores an application program 321 or data 322. The memory 31 and the storage medium 32 may be transient or persistent storage devices. The program stored in the storage medium 32 may include one or more modules (not shown in the figure), and each module may include a series of instructions and operations for the terminal device. Further, the CPU 30 may be configured to communicate with the storage medium 32, and perform, on the terminal device, the series of instructions and operations in the storage medium 32.

Specifically, the application program 321 stored in the storage medium 32 includes an avatar-based data interacting application program, and the program may include the interface unit 21, the object determining unit 22, the displaying unit 23, the setting unit 24, the panel unit 25, the refresh unit 26, the interaction unit 27, and the chat scene processing unit 28 in the foregoing social networking application system. Details are not described herein again. Further, the CPU 30 may be configured to communicate with the storage medium 32, and perform, on the terminal device, the series of operations that correspond to the avatar-based data interacting application program and that is stored in the storage medium 32.

The terminal device may further include one or more power supplies 33, one or more wired or wireless network interfaces 34, one or more input/output interfaces 35, and/or one or more operating systems 323, for example, Windows Server^{™}, Mac OS X^{™}, Unix^{™}, Linux^{™}, or FreeBSD^{™}.

The operations performed by the social networking application system in the foregoing method embodiments may be based on the structure of the terminal device shown in FIG. 14.

Another aspect of the embodiments of the present disclosure further provides a computer-readable storage medium. The computer-readable storage medium stores a plurality of computer programs, and the computer programs are configured to be loaded by a processor to perform the avatar-based data interacting method performed by the foregoing social networking application terminal or social networking application system.

Another aspect of the embodiments of the present disclosure further provides a terminal device, including a processor and a memory.

The memory is configured to store a plurality of computer programs, and the computer programs are configured to be loaded by the processor to perform the avatar-based data interacting method performed by the social networking application system. The processor is configured to implement each of the plurality of computer programs.

In addition, according to an aspect of the present disclosure, a computer program product or a computer program is provided. The computer program product or the computer program includes computer instructions, and the computer instructions are stored in a computer-readable storage medium. A processor of the computer device reads the computer instructions from the computer-readable storage medium, and the processor executes the computer instructions, so that the computer device performs the avatar-based data interacting method provided in the foregoing various implementations.

A person of ordinary skill in the art may understand that all or some of the steps of the methods in the embodiments may be implemented by a program instructing relevant hardware. The program may be stored in a computer-readable storage medium. The storage medium may include: a read-only memory (ROM), a random access memory (RAM), a magnetic disk, an optical disc, or the like.

The foregoing describes the avatar-based data interacting methods, the system, the storage medium, and terminal device provided in the embodiments of the present disclosure in detail. Specific examples are used in the specification to illustrate the principles and implementations of the present disclosure. The descriptions of the embodiments are merely for helping understand the method and the core idea thereof in the present disclosure. In addition, for a person of ordinary skill in the art may, based on the idea of the present disclosure, make modifications with respect to the specific implementations and the application scope. Therefore, the content of this specification shall not be construed as a limitation to the present disclosure.

## Claims

1. A data interacting method based on a social networking application, executable by a terminal device, and comprising:
displaying an application interface of the social networking application logged in with a current user account, the application interface comprising a filtering control element and a plurality of second avatars, each of the plurality of second avatars corresponding to one of a plurality of interaction objects, the current user account being associated with a first avatar ; and
in response to a triggering operation performed on the filtering control element,
determining at least one first target interaction object, satisfying a preset condition associated with a login state of the current user account, from the plurality of interaction objects, the login state of the current user account indicating a state of the first avatar or a user state of the current user account; and
controlling the application interface to keep displaying the second avatar of the at least one first target interaction object, and hide the second avatars remaining in the plurality of second avatars.

2. The method according to claim 1, wherein the plurality of interaction objects comprise interaction user accounts, and the method further comprises:
displaying the login state of the current user account in a first area of the application interface; and
after the displaying of the login state of the current user account in the first area has reached a preset time, replacing the login state of the current user account in the first area with a matching control element, the matching control element being configured to find, based on a preset matching condition, a second user account on the social networking application to interact with the current user account.

3. The method according to claim 2, wherein at least one candidate login state is displayed in a second area of the application interface, the first area and the second area being adjacent areas, and the method further comprises:
displaying one of the at least one candidate login state in the first area upon detecting a user operation of moving from the first area to the second area or a triggering operation performed on the second area; and
the method further comprises:
determining a second target interaction object based on the one candidate login state displayed in the first area; and
displaying an avatar of the second target interaction object in the application interface.

4. The method according to claim 3, further comprising:
in response to that the one candidate login state displayed in the first area is not consistent with the login state of the current user account, replacing the login state of the current user account with the one candidate login state displayed in the first area.

5. The method according to claim 1, wherein the method comprises hiding the filtering control element displayed in the application interface and displaying the second avatar of the at least one first target interaction object, comprising at least one of the following:
hiding the first avatar of the current user account and the filtering control element displayed in the application interface and displaying the second avatar of the at least one first target interaction object;
hiding the filtering control element displayed in the application interface and displaying the first avatar of the current user account and the second avatar of the at least one first target interaction object; or
hiding the filtering control element displayed in the application interface and displaying the second avatar of the at least one first target interaction object.

6. The method according to claim 1, wherein in response to the triggering operation performed on the filtering control element, the method further comprises:
in response to the triggering operation performed on the filtering control element, switching from displaying the application interface to displaying a sub-control element panel for interaction object filtering, and displaying, on the sub-control element panel, a plurality of sub-control elements for interaction object filtering each corresponding to one of a plurality of login states; and
hiding the sub-control element panel in response to an operation performed on a sub-control element of the plurality of sub-control elements, and in response to that a login state corresponding to the operated sub-control element is consistent with the login state of the current user account, determining the at least one first target interaction object; or in response to that the login state corresponding to the operated sub-control element is inconsistent with the login state of the current user account, determining a third target interaction object related to the login state corresponding to the operated sub-control element, and displaying an avatar of the third target interaction object in the application interface.

7. The method according to any one of claims 1 to 6, wherein the interaction object comprises a user account, a topic, or a chat scene;
in response to that the login state of the current user account is an interaction-type login state, the at least one first target interaction object comprises at least one of the following: a user account having a same login state as the current user account, or a chat scene related to the login state of the current user account; and
in response to that the login state of the current user account is a content-type login state, the at least one first target interaction object comprises at least one of the following: the user account having the same login state as the current user account, or a topic related to the login state of the current user account.

8. The method according to any one of claims 1 to 6, wherein displaying the second avatar of the at least one first target interaction object comprises:
displaying a two-dimensional image of the at least one first target interaction object, and loading a three-dimensional model of the at least one first target interaction object based on the two-dimensional image of the at least one first target interaction object; and
binding the three-dimensional model with an interaction control element corresponding to the at least one first target interaction object, and performing an interaction operation with the at least one first target interaction object when the interaction control element receives a triggering operation.

9. The method according to any one of claims 1 to 6, wherein when the application interface is displayed, the application interface displays a background space, and the method further comprises:
when user operation information is received in the background space of the application interface and the user operation information is a preset refresh operation gesture, obtaining one or more fourth target interaction objects based on the user operation information, and displaying one or more avatars of the one or more fourth target interaction objects on the application interface.

10. The method according to any one of claims 1 to 6, wherein the application interface further comprises a state setting control element, and the method further comprises:
switching from displaying the application interface to displaying a state setting interface in response to an operation performed on the state setting control element, the state setting interface comprising a state control element;
displaying a login state selecting interface in response to an operation performed on the state control element, the login state selecting interface comprising at least one of the following: a plurality of candidate login states, a customization control element for customizing a login state, or an intelligently matched login state; and
determining a login state determined from the login state selecting interface as the login state of the current user account.

11. The method according to any one of claims 1 to 6, wherein an interaction object in the plurality of interaction objects comprise a user account, and the method further comprises:
displaying a chat establishing control element in response to an operation on the second avatar of the interaction object, the chat establishing control element being configured to trigger real-time interaction with the interaction object; and
in response to an operation on the chat establishing control element, creating and displaying a first chat scene and an inviting control element, and displaying the first avatar corresponding to the current user account and the second avatar corresponding to the interaction object to interact with the current user account in the first chat scene, the inviting control element being configured to invite at least one interaction object to join the first chat scene.

12. The method according to claim 11, wherein the application interface further comprises a matching control element, and after displaying of the application interface, the method further comprises:
in response to an operation on the matching control element displayed on the application interface, determining the interaction object having a same login state as the current user account, and performing the operation of displaying the first chat scene.

13. The method according to claim 11, before displaying the first avatar corresponding to the current user account and the second avatar corresponding to the interaction object in the first chat scene, the method further comprising:
creating a second chat scene in response to that a chat scene state of the current user account indicates that the current user account is currently not in any chat scene and a chat scene state of the interaction object indicates that the interaction object is currently not in any chat scene; adding the current user account and the interaction object to the second chat scene, and establishing a chat session between the current user account and the interaction object; and
in response to that the chat scene state of the interaction object indicates that the interaction object is currently in a current chat scene of the interaction object and the chat scene state of the current user account indicates that the current user account is currently not in any chat scene, instructing the interaction object to exit the current chat scene of the interaction object, and in response to that the interaction object agrees to exit the chat scene which the interaction object is currently in, creating a third chat scene, adding the current user account and the interaction object to the created third chat scene, and establishing the chat session between the current user account and the interaction object.

14. The method according to any one of claims 1 to 6, wherein the method further comprises:
popping up an invitation selecting control element, the invitation selecting control element being configured for the current user account to select agreeing or refusing to join a chat scene of an inviting user account; and
in response to that a current chat scene that the current user account is currently in is being displayed, switching from the current chat scene of the current user account to the chat scene of the inviting user account when information about agreeing to join the chat scene of the inviting user account is received.

15. The method according to claim 14, wherein when information about agreeing to join the chat scene of the inviting user account is received, the method further comprises:
adding the current user account to the chat scene of the inviting user account in response to that the chat scene state of the current user account indicates that the current user account is currently not in any chat scene; and
in response to that chat scene states of the current user account and the inviting user account indicate that the current user account and the inviting user account are currently in different chat scenes, exiting, by the current user account, the current chat scene of the current user account, and joining the chat scene of the inviting user account.

16. A social networking system, comprising:
an interface unit, configured to display an application interface of a social networking application logged in with a current user account, the application interface comprising a filtering control element and a plurality of second avatars, each of the plurality of second avatars corresponding to one of a plurality of interaction objects, the current user account being associated with a first avatar;
an object determining unit, configured to, in response to a triggering operation performed on the filtering control element, determine at least one first target interaction object, satisfying a preset condition associated with a login state of the current user account, from the plurality of interaction objects, the login state of the current user account indicating a state of the first avatar or a user state of the current user account; and
a displaying unit, configured to control the application interface to keep displaying the second avatar of the at least one first target interaction object, and hide the second avatars remaining in the plurality of second avatars.

17. A computer-readable storage medium, having a plurality of computer programs stored therein, the computer programs being configured to be loaded by a processor to perform the avatar-based data interacting method according to any one of claims 1 to 15.

18. A terminal device, comprising a processor and a memory,
the memory being configured to store a plurality of computer programs, and the computer programs being configured to be loaded by the processor to perform the data interacting method according to any one of claims 1 to 15; and the processor being configured to implement each of the plurality of computer programs.

19. A computer program product, comprising computer instructions, the computer instructions being stored in a computer-readable storage medium, and the computer instruction being configured to be loaded by a processor to perform the data interacting method according to any one of claims 1 to 15.
